# EUROPEAN PATENT APPLICATION

(11) **EP 4 793 799 A1**
(43) Date of publication of application: **19.08.2026**
(21) Application number: 24919142.0
(22) Date of filing: 30.12.2024
(51) Int. Cl.: G06F 18/25, G06T 7/10, G06N 3/0464, G06N 3/08, G06F 18/243

(54) **DATA PROCESSING METHOD AND APPARATUS BASED ON MULTI-MODAL FUSION**

(30) Priority: 15.10.2024 CN 202411437466
(71) Applicant: Nanchang Virtual Reality Research Institute Co., Ltd., Nanchang, Jiangxi 330000 (CN)
(72) Inventor: JIANG, Zhufeng, Nanchang, Jiangxi 330000 (CN); WANG, Hui, Nanchang, Jiangxi 330000 (CN); SUN, Qimin, Nanchang, Jiangxi 330000 (CN); ZHU, Zhiliang, Nanchang, Jiangxi 330000 (CN); ZHOU, Jianguo, Nanchang, Jiangxi 330000 (CN)
(74) Representative: Metida
(86) International application number: PCT/CN2024/143988
(87) International publication number: WO 2026/081365

(57) **Abstract**

The present application provides a data processing method and apparatus based on multimodal fusion, pertaining to the technical field of data processing, where the method includes: acquiring one-dimensional data and image data; converting the one-dimensional data into two-dimensional data based on a dimension of the image data; performing zero-padding processing on vacant positions in the two-dimensional data; performing stacking processing on the zero-padded two-dimensional data and the image data to obtain a multilayer stacked input feature map; performing fusion processing on the multilayer stacked input feature map through a neural network to obtain a fused feature map; and performing data processing based on the fused feature map. The present invention can unify the data formats of different modalities, enabling them to be processed in the same feature space, significantly simplifying the alignment process between heterogeneous data.

## Description

### TECHNICAL FIELD

Each embodiment of the present application pertains to the technical field of data processing, and specifically relates to a data processing method and apparatus based on multimodal fusion.

### BACKGROUND

With the rapid development of computer technology, particularly the widespread application of deep learning methods in the field of computer vision, multimodal fusion technology has become one of the important frontiers in current science and technology. Multimodal fusion technology primarily enhances the information processing capability of machines by integrating information from different data sources, such as images, text, audio, and sensor data.

The application scenarios of multimodal technology are extremely broad, encompassing multiple fields such as intelligent transportation, security monitoring, and intelligent human-machine interaction. In these applications, multimodal scene classification technology can achieve precise classification and understanding of scenes by comprehensively analyzing data from various modalities, such as images, videos, and text.

Multimodal image classification further expands this scope, not limited to a single image type, but integrating multiple image modalities, such as RGB images, infrared images, and depth images, to obtain more detailed information about the observed object. Additionally, multimodal object detection technology utilizes the comprehensive information of these data to detect and locate specific targets in images or videos, such as in applications for autonomous driving and night vision monitoring, effectively improving recognition accuracy and system response speed.

However, current multimodal data fusion technologies suffer from low processing efficiency for heterogeneous data, difficulty in alignment during the conversion of heterogeneous data, susceptibility to information loss, challenges in effective feature extraction, and low data fusion quality.

### SUMMARY

To address the technical problems in the prior art, such as low processing efficiency of heterogeneous data, difficulty in alignment during heterogeneous data conversion, susceptibility to information loss, challenges in effective feature extraction, and low data fusion quality, the present invention provides a data processing method and apparatus based on multimodal fusion.

According to a first aspect, the present invention provides a data processing method based on multimodal fusion, including:
acquiring one-dimensional data and image data;
converting the one-dimensional data into two-dimensional data based on a dimension of the image data;
performing zero-padding processing on vacant positions in the two-dimensional data;
performing stacking processing on the zero-padded two-dimensional data and the image data to obtain a multilayer stacked input feature map;
performing fusion processing on the multilayer stacked input feature map through a neural network to obtain a fused feature map; and
performing data processing based on the fused feature map.

According to a second aspect, the present invention provides a data processing apparatus based on multimodal fusion, including:
an acquisition module configured to acquire one-dimensional data and image data;
a conversion module configured to convert the one-dimensional data into two-dimensional data based on a dimension of the image data;
a zero-padding module configured to perform zero-padding processing on vacant positions in the two-dimensional data;
a stacking module configured to perform stacking processing on the zero-padded two-dimensional data and the image data to obtain a multilayer stacked input feature map;
a fusion module configured to perform fusion processing on the multilayer stacked input feature map through a neural network to obtain a fused feature map; and
a processing module configured to perform data processing based on the fused feature map.

Compared with the prior art, the present invention has at least the following beneficial effects:
In the present invention, by converting one-dimensional data into two-dimensional data with the same dimension as the image data and stacking it with the image data, the data formats of different modalities can be unified, enabling them to be processed in the same feature space, significantly simplifying the alignment process between heterogeneous data and ensuring data integrity. By processing the multilayer stacked input feature map through a neural network, the powerful automatic feature extraction capability of the deep learning model can be utilized to efficiently fuse features from different modalities, improving the quality of data fusion.

### BRIEF DESCRIPTION OF DRAWINGS

FIG. 1 is a schematic flowchart of a data processing method based on multimodal fusion provided by the present invention.
FIG. 2 is a schematic diagram of an overall network structure of a data processing method based on multimodal fusion provided by the present invention.
FIG. 3 is a schematic diagram of a data conversion structure provided by the present invention.
FIG. 4 is a schematic diagram of a feature selection structure provided by the present invention.
FIG. 5 is a schematic diagram of a structure of a data processing apparatus based on multimodal fusion provided by the present invention.

The drawings described herein are provided to further understand the present application and constitute a part of the present application. The exemplary embodiments of the present application and their descriptions are used to explain the present application and do not constitute an improper limitation of the present application. Some specific embodiments of the present application will be described in detail below with reference to the drawings in an exemplary and non-limiting manner.

### DESCRIPTION OF EMBODIMENTS

To enable those skilled in the art to better understand the solutions of the present application, the technical solutions in the embodiments of the present application will be clearly described below in conjunction with the drawings in the embodiments of the present application. It is apparent that the described embodiments are only a part of the embodiments of the present application, rather than all embodiments. Based on the embodiments in the present application, all other embodiments obtained by those of ordinary skill in the art without creative efforts shall fall within the scope of protection of the present application.

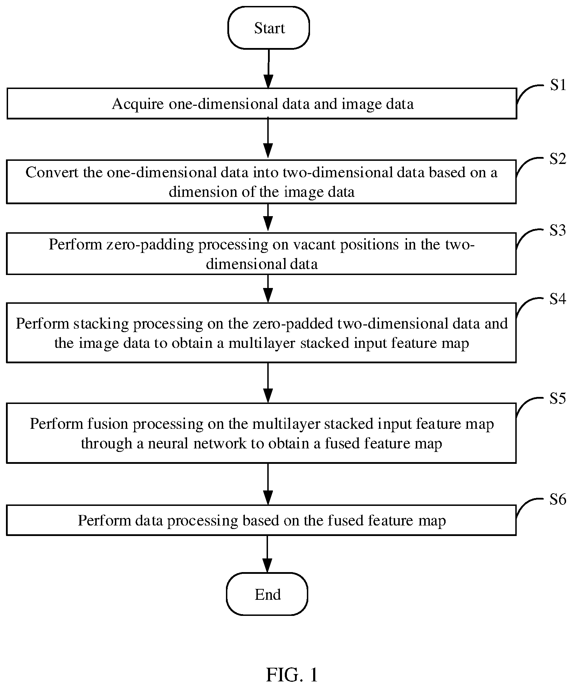

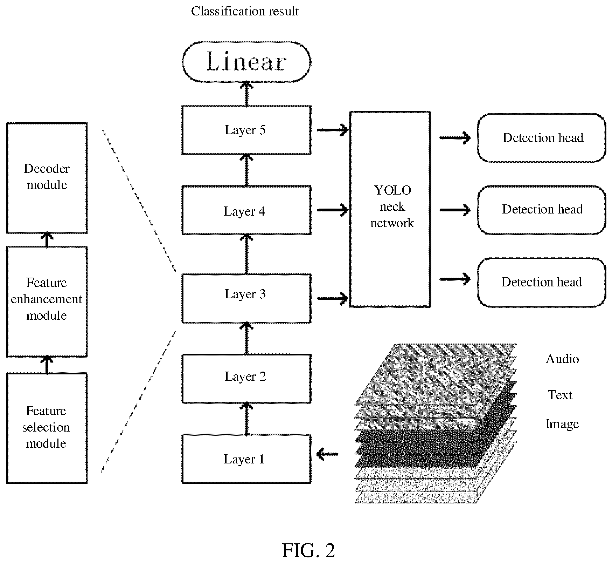

According to a first aspect, referring to FIG. 1 of the specification, a schematic flowchart of a data processing method based on multimodal fusion provided by an embodiment of the present invention is shown. Referring to FIG. 2 of the specification, a schematic diagram of an overall network structure of a data processing method based on multimodal fusion provided by an embodiment of the present invention is shown.

The present invention provides a data processing method based on multimodal fusion, including:
S1: Acquire one-dimensional data and image data.

Optionally, the one-dimensional data may specifically be audio data, text data, current data, or the like.

S2: Convert the one-dimensional data into two-dimensional data based on a dimension of the image data.

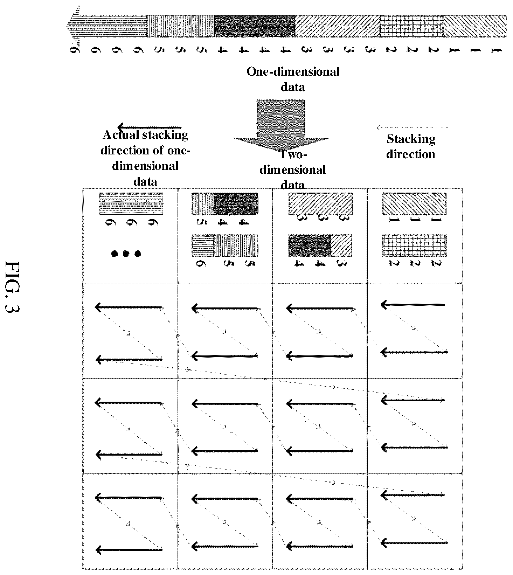

Referring to FIG. 3 of the specification, a schematic diagram of a data conversion structure provided by an embodiment of the present invention is shown.

In a possible implementation, S2 specifically includes sub-steps S201 to S203:

S201: Determine multiple grids of a same size based on the dimension of the image data.

Optionally, when the dimension of the image data is H×W, 25 grids of the same size may be determined according to $\frac{H}{5} \times \frac{W}{5}$.

S202: Segment the one-dimensional data into multiple one-dimensional sub-data according to a preset size.

Optionally, those skilled in the art may set the specific value of the preset size based on actual conditions, which is not limited by the present invention.

S203: Fill the one-dimensional sub-data into each of the grids to form two-dimensional data.

Optionally, fill the one-dimensional sub-data into each of the grids in a top-to-bottom, left-to-right order, and within each grid, fill each data point into each pixel in the same top-to-bottom, left-to-right order.

In the present invention, the grids process the one-dimensional data in blocks, ensuring that adjacent or related one-dimensional data are filled into the same grid. This approach can preserve the local correlation in the one-dimensional data, allowing the data to maintain a certain continuity and relevance in the two-dimensional structure, which helps the model better capture local features and patterns. Meanwhile, grid filling makes the distribution of one-dimensional data in the two-dimensional space more structured and orderly. Within each grid, the data are filled in a specific order, and this structured representation can enhance the spatial interpretability of the data, enabling the model to more intuitively understand and utilize the distribution characteristics of these data.

S3: Perform zero-padding processing on vacant positions in the two-dimensional data.

In the present invention, through zero-padding processing, it can be ensured that each position has a value, thereby avoiding information loss due to vacant positions and ensuring that the representation of the data in the two-dimensional space is complete. Furthermore, during neural network training, vacant positions may lead to the generation of invalid gradients, affecting the convergence of the model, while zero-padding processing can avoid this issue, ensuring the effectiveness of gradient computation.

S4: Perform stacking processing on the zero-padded two-dimensional data and the image data to obtain a multilayer stacked input feature map.

S5: Perform fusion processing on the multilayer stacked input feature map through a neural network to obtain a fused feature map.

It should be noted that the neural network has powerful nonlinear feature extraction capabilities. By processing the multilayer stacked input feature map, the neural network can automatically extract higher-level, more abstract features and perform fusion, fully utilizing the advantages of multimodal data, automatically extracting and fusing valuable features, enhancing the expressive power, robustness, and generalization ability of the model, while improving the accuracy of decision-making and the flexibility of the model.

In a possible implementation, S5 specifically includes sub-steps S501 to S503:

S501: Perform feature selection on the multilayer stacked input feature map to obtain a selected feature map.

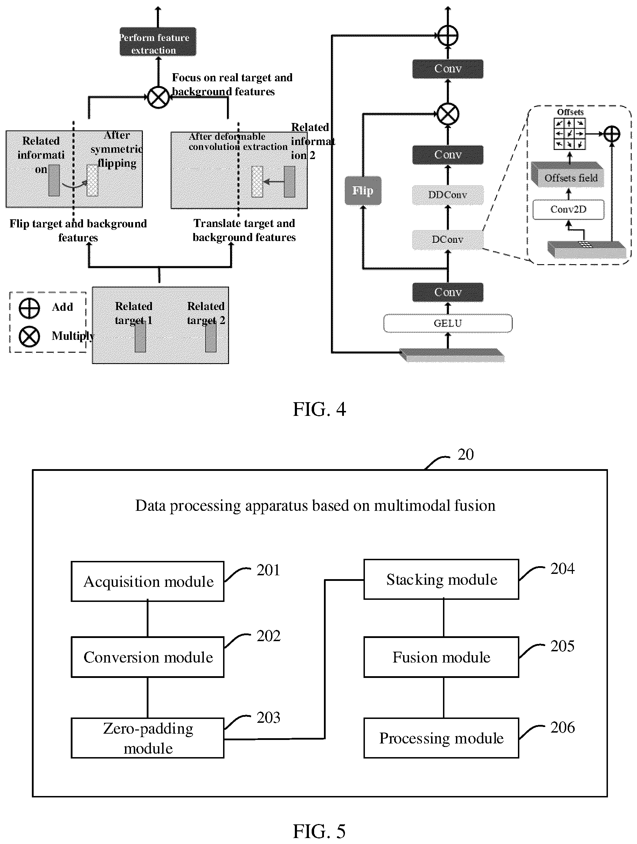

Referring to FIG. 4 of the specification, a schematic diagram of a feature selection structure provided by an embodiment of the present invention is shown.

Optionally, S501 specifically includes:
S5011: Perform feature extraction and activation on the input feature map through a first convolution unit to obtain an activated feature map. Optionally, the activated feature map is specifically: $X ′ = RELU \left({Conv}_{1}\left(X\right)\right) ,$ where *X'* represents the activated feature map, RELU represents the RELU activation function, Conv₁ represents the first convolution unit, and X represents the input feature map.

Optionally, the first convolution unit employs a 3×3 convolution and a RELU activation function.

The ReLU (Rectified Linear Unit) activation function is one of the most commonly used activation functions in deep learning. Its primary role is to introduce nonlinearity, enabling the model to learn more complex features. Linear transformations are inherently unable to handle nonlinear problems, and ReLU introduces nonlinear characteristics by setting the parts of the input values less than zero to zero, thereby enabling the model to fit and process complex nonlinear data distributions.

It should be noted that performing feature extraction and activation through the first convolution unit, utilizing the combination of a 3×3 convolution kernel and a ReLU activation function, can effectively enhance feature extraction capabilities, introduce nonlinearity, improve computational efficiency, and increase sparsity and robustness of the model.

S5012: Duplicate the activated feature map into two copies, namely a first activated feature map and a second activated feature map.

S5013: Perform symmetric flipping on the first activated feature map along a central axis to obtain a symmetric feature map.

Optionally, the symmetric feature map is specifically: ${X}^{f} = Flip \left(X′\right) ,$ where *X^{f}* represents the symmetric feature map, and Flip represents symmetric flipping.

It should be noted that performing symmetric flipping on the first activated feature map can help the model recognize symmetric structures in the image, improving the sensitivity and robustness of the feature map to symmetric shapes. Symmetry is an important geometric characteristic in many visual tasks, and this operation enables the model to better understand and utilize this characteristic.

S5014: Perform convolution processing on the second activated feature map through a second convolution unit to obtain a deformed feature map.
Optionally, the second convolution unit employs a 7×7 convolution, a 5×5 deformable dilated convolution with a dilation rate of 1, and a 3×3 convolution which are connected in series.

Optionally, the deformed feature map is specifically: ${X}^{d} = {Conv}_{2} \left(DConv\left(DDConv\left(X′\right)\right)\right) ,$ where *X^{d}* represents the deformed feature map, Conv₂ represents a 3×3 convolution, DConv represents a deformable dilated convolution, and DDConv represents a 7×7 convolution.

It should be noted that using deformable dilated convolution can enhance the adaptability of the model to deformed objects. Dilated convolution (with a dilation rate) can expand the receptive field of the convolution, and deformable convolution can dynamically adjust the position of the convolution kernel, thereby better capturing features with significant deformation or scale changes. This makes the model more accurate and flexible in processing objects with complex geometric shapes.

Furthermore, by using multiple convolution layers (such as 3×3 convolution, 7×7 convolution, and deformable dilated convolution), features can be extracted from different scales and receptive fields. This diversified convolution operation can capture richer and more complex features in the image, enhancing understanding of details and global information of the model.

S5015: Multiply the deformed feature map with the symmetric feature map and perform convolution processing through a third convolution unit.

Optionally, the third convolution unit employs a 3×3 convolution.
S5016: Add the feature map processed by the third convolution unit to the input feature map to obtain the selected feature map.

Optionally, the selected feature map is specifically: $Y = {Conv}_{4} \left[{Conv}_{3}\left({X}^{d}⊗{X}^{f}\right)+X\right] ,$ where Y represents the selected feature map, Conv₃ represents a 3×3 convolution, and Conv₄ represents a 3×3 convolution.

It should be noted that adding the feature map processed by the third convolution unit to the original input feature map enables feature selection and optimization. This residual connection approach can incorporate newly extracted feature information while preserving the original features, thereby reducing information loss and enhancing the overall expressive power of the feature map. This operation can also avoid the vanishing gradient problem, further improving stability and training efficiency of the model.

S502: Perform feature enhancement on the selected feature map to obtain an enhanced feature map.

Optionally, S502 specifically includes:
S5021: Perform convolution processing on the selected feature map through a fourth convolution unit and a channel attention unit to obtain a large receptive field feature map.

Optionally, the fourth convolution unit employs a 9×9 convolution.

Optionally, the large receptive field feature map is specifically: $Y ′ = SE \left({Conv}_{9 \times 9}\left(Y\right)\right) ,$ where Y' represents the large receptive field feature map, SE represents the channel attention unit, Conv_{9×9} represents a 9×9 convolution, and Y represents the selected feature map.

It should be noted that large-kernel convolution can achieve a larger receptive field, consider broader relationships between features, and capture more semantic information.

Furthermore, the channel attention mechanism (SE module) assigns weights to channels of different modalities, enabling the model to adaptively focus on more important feature channels. This weighting approach can effectively enhance the attention of the model to key features, reduce interference from irrelevant or secondary information, and thereby improve the quality of feature extraction. For multimodal fusion, channel attention can also ensure that useful information from each modality is fully utilized, enhancing the fusion effect.

S5022: Perform deformation processing on the large receptive field feature map through a linear transformation unit.

Optionally, the linear transformation unit includes a first linear layer, a GELU activation function, and a second linear layer connected in series.

It should be noted that through the series-connected linear layers and GELU activation function, the linear transformation unit can effectively connect relationships between various modalities, achieving interaction of multimodal semantic information. The linear layers perform transformation and mapping in the multimodal feature space, enabling features from different modalities to be effectively fused and interacted within the same feature space. This interaction can help the model better understand and utilize comprehensive information from different modalities, thereby enhancing the final decision-making capability.

S5023: Add the deformed large receptive field feature map to the selected feature map to obtain the enhanced feature map.

Optionally, the enhanced feature map is specifically: $Z = {linear}_{1} \left(GELU\left({linear}_{2}\left(Y′\right)\right)+Y\right) ,$ where Z represents the enhanced feature map, linear₁ represents the first linear layer, GELU represents the GELU activation function, and linear₂ represents the second linear layer.

It should be noted that adding the deformed large receptive field feature map to the selected feature map forms a residual connection. This operation not only preserves the original feature information but also integrates features enhanced through large-kernel convolution and channel attention. This multi-level fusion can enhance the expressive power of the feature map, ensuring that more semantic information is captured while maintaining the integrity and detail of the original features.

S503: Decode the enhanced feature map to obtain the fused feature map.

Optionally, S503 specifically includes:
S5031: Perform normalization processing on the enhanced feature map.

It should be noted that normalization can reduce the scale differences in input data, prevent model training instability due to data of different scales, and help better learn features.

S5032: Perform convolution processing on the normalized enhanced feature map through a fifth convolution unit.

Optionally, the fifth convolution unit employs depthwise separable convolution.

Optionally, the depthwise separable convolution is specifically: $Z ′ = DWC \left(GN\left(Z\right)\right) ,$ where Z' represents the feature map processed by depthwise separable convolution, DWC represents depthwise separable convolution, GN represents normalization, and Z represents the enhanced feature map.

It should be noted that commonly used attention decoders are mostly composed of multiple linear layers. Compared to common attention decoders and ordinary convolution, depthwise separable convolution decomposes the convolution operation into depthwise convolution and pointwise convolution, significantly reducing computational load while maintaining or even enhancing feature extraction capabilities. Due to improved computational efficiency, the model can handle more complex tasks with the same computational resources, and its representational capability is enhanced, making the extracted features richer and more effective.

S5033: Perform channel scaling processing on the convolution-processed enhanced feature map.

It should be noted that performing channel scaling processing on the convolution-processed enhanced feature map can dynamically adjust the weights of each channel, enabling the model to better focus on the importance of different feature channels.

S5034: Add the channel-scaled enhanced feature map to the enhanced feature map to obtain an intermediate feature map.

It should be noted that adding to the original enhanced feature map forms a residual connection, which not only preserves the original feature information but also integrates new features processed by convolution, further enhancing the expressiveness and complexity of the features. This multi-level fusion strategy can improve the ability of the model to integrate data from different modalities, ensuring that important information is effectively utilized.

S5035: Decode the intermediate feature map through group normalization and a channel multilayer perceptron to obtain the fused feature map.

Optionally, the fused feature map is specifically: $W = CMLP \left(GN\left(Z′\right)\right) ,$ where W represents the fused feature map, and CMLP represents the multilayer perceptron.

It should be noted that processing the intermediate feature map through a channel multilayer perceptron can perform complex nonlinear transformations in the channel dimension. This operation can further enhance the feature decoding capability of the model, enabling the final output fused feature map to better capture the interactive relationships and semantic structures of multimodal information, providing stronger expressiveness.

S6: Perform data processing based on the fused feature map.

In a possible implementation, S6 specifically includes: Perform object detection based on the fused feature map.

It should be noted that object detection is an important task in the field of computer vision, requiring not only the identification of target categories in the image (such as cats, cars, people, and the like) but also the determination of their positions in the image. The final output of object detection typically includes the category label of the target and corresponding bounding box (Bounding Box), that is, the coordinates of the region where the target is located.

Optionally, the feature map obtained from the multilayer fusion layer can be input into an object detection network for object detection:
P5,P4,P3 = Input
C5 = P5
C4 = C2F(Upsample(P5) ∪ P4)
C3 = C2F(Upsample(P4) ∪ P3)
T3 = C3
T4 = C2F(CBS(C3) ∪ C4)
T5 = C2F(CBS(T4) ∪ C5)
Output = T5,T4,T3,
where CBS represents a combination of convolution, batch normalization, and SILU activation function, C2F is a multi-branch structure in YOLOV8 used for feature extraction, Upsample represents an upsampling operation, P5, P4, P3 are inputs to the neck network, and T5, T4, T3 are outputs of the neck network.

Furthermore, input the feature map obtained from the neck network into the detection head to obtain prediction results:
T5*^{B}*,*T5^{C}* = Split(T5) ${Bbox}_{S} = Conv 1 \times 1 \left(CBS\left(T{5}^{B}\right)\right)$ ${Cls}_{S} = Conv 1 \times 1 \left(CBS\left({T 5}^{C}\right)\right)$
T4*^{B}*,T4*^{C}* = Split(T4) ${Bbox}_{M} = Conv 1 \times 1 \left(CBS\left(T{4}^{B}\right)\right)$ ${Cls}_{M} = Conv 1 \times 1 \left(CBS\left(T{4}^{C}\right)\right)$
T3*^{B}*,T3*^{C}* = Split(T3) ${Bbox}_{L} = Conv 1 \times 1 \left(CBS\left({T 3}^{B}\right)\right)$ ${Cls}_{L} = Conv 1 \times 1 \left(CBS\left({T 3}^{C}\right)\right) ,$
where Split represents a splitting operation, with the split results used partly for predicting classification and partly for predicting bounding boxes. The superscripts B and C on T5, T4, T3 indicate predictions for bounding boxes and categories, respectively. The input feature maps T5, T4, T3 are used to predict small targets S, medium targets M, and large targets L, respectively. Bbox represents the predicted bounding box, and Cls represents the predicted category.

In a possible implementation, the loss function for training the neural network in object detection is specifically: ${L}_{a} = {λ}_{1} {L}_{C} + {λ}_{2} {L}_{CIoU} + {λ}_{3} {L}_{conf} ,$ where *Lₐ* represents the loss function in the object detection process, *L_{c}* represents the cross-entropy loss, *λ*₁ represents the weight of the cross-entropy loss, *L_{CIoU}* represents the bounding box loss, *λ*₂ represents the weight of the bounding box loss, *L_{conf}* represents the confidence loss, and *λ*₃ represents the weight of the confidence loss.

Those skilled in the art may set the values of the cross-entropy loss weight *λ*₁, the bounding box loss weight *λ*₂, and the confidence loss weight *λ*₃ based on actual conditions, which is not limited by the present invention.

It should be noted that combining these different loss functions and using a weighted loss function for training can enable the model to more comprehensively learn different object detection tasks, improving the final detection accuracy and generalization ability.

Optionally, the cross-entropy loss is specifically: ${L}_{C} = \frac{1}{N} {\sum }_{i} - \left[{y}_{i}⋅log\left({p}_{i}\right)+\left(1-{y}_{i}\right)⋅log\left(1-{p}_{i}\right)\right] ,$ where *í* represents each sample, *pᵢ* represents the prediction result of the model for the *i*-th sample being 1, with a value closer to 1 indicating a higher likelihood of belonging to that category, *yᵢ* represents whether the actual sample belongs to that category, with *yᵢ* being 1 if it does and 0 if it does not, and N represents the total number of predictions.

Optionally, the bounding box loss is specifically: $v = \frac{4}{{π}^{2}} {\left(arctan\frac{{w}_{gt}}{{h}_{gt}}-arctan\left(\frac{w}{h}\right)\right)}^{2}$ $α = \frac{v}{\left(1-IoU\right) + v}$ ${L}_{CIoU} = 1 - IoU + \frac{{ρ}^{2} \left(b, {b}^{gt}\right)}{{c}^{2}} + αv ,$ where IoU represents the intersection over union of the predicted box A and the ground truth box B, b represents the center point of the predicted bounding box, *b^{gt}* represents the center point of the actual bounding box, w represents the width of the predicted bounding box, *w_{gt}* represents the width of the actual bounding box, *h* represents the height of the predicted bounding box, *h_{gt}* represents the height of the actual bounding box, *ρ*² represents the Euclidean distance between them, and c represents the diagonal distance of the smallest rectangle containing both boxes.

Optionally, the confidence loss is specifically: $\begin{matrix}{L}_{conf} = - {w}^{obj} {\sum }_{obj} \left[{p}_{i}^{obj}log\left({\hat{p}}_{i}^{obj}\right)+\left(1-{p}_{i}^{obj}\right)log\left(1-{\hat{p}}_{i}^{obj}\right)\right] \\ - {\sum }_{no} \left[{p}_{j}^{no}log\left({\hat{p}}_{j}^{no}\right)+\left(1-{p}_{j}^{no}\right)log\left(1-{\hat{p}}_{j}^{no}\right)\right] ,\end{matrix}$ where *obj* represents samples where a target actually exists, *i* corresponds to each sample where a target exists, *no* represents samples where no target exists, *j* corresponds to each sample where no target exists, *w^{obj}* is used to adjust the weight of samples with targets, generally set to 4, ${p}_{i}^{obj}$ represents the value corresponding to samples where a target actually exists, denoted as 1, ${\hat{p}}_{i}^{obj}$ represents the predicted probability corresponding to samples where a target actually exists, ${p}_{j}^{no}$ represents the value corresponding to samples where no target exists, denoted as 0, and ${\hat{p}}_{j}^{no}$ represents the predicted probability corresponding to samples where no target exists.

In a possible implementation, S6 specifically includes: Perform classification processing based on the fused feature map.

In a possible implementation, a loss function for training the neural network in the classification processing is specifically: ${L}_{b} = - {\sum }_{c = 1}^{C} {y}_{c} log \left({p}_{c}\right) ,$ where *L_{b}* represents a loss function in a classification process, *y_{c}* represents an actual label value of the *c*-th category, *p_{c}* represents a predicted classification value of the *c*-th category, and *C* represents a total number of categories.

It should be noted that the cross-entropy loss can effectively handle multi-class classification problems, even in cases with a large number of categories, by assigning appropriate loss weights to each category. By measuring the difference between the predicted probability distribution and the true label distribution, it helps the model optimize the correct category.

Compared with the prior art, the present invention has at least the following beneficial effects:

In the present invention, by converting one-dimensional data into two-dimensional data with the same dimension as the image data and stacking it with the image data, the data formats of different modalities can be unified, enabling them to be processed in the same feature space, significantly simplifying the alignment process between heterogeneous data and ensuring data integrity. By processing the multilayer stacked input feature map through a neural network, the powerful automatic feature extraction capability of the deep learning model can be utilized to efficiently fuse features from different modalities, improving the quality of data fusion.

According to a second aspect, referring to FIG. 5 of the specification, a schematic diagram of ae structure of a data processing apparatus based on multimodal fusion provided by an embodiment of the present invention is shown.

The present invention provides a data processing apparatus 20 based on multimodal fusion, including:
an acquisition module 201 configured to acquire one-dimensional data and image data;
a conversion module 202 configured to convert the one-dimensional data into two-dimensional data based on a dimension of the image data;
a zero-padding module 203 configured to perform zero-padding processing on vacant positions in the two-dimensional data;
a stacking module 204 configured to perform stacking processing on the zero-padded two-dimensional data and the image data to obtain a multilayer stacked input feature map;
a fusion module 205 configured to perform fusion processing on the multilayer stacked input feature map through a neural network to obtain a fused feature map; and
a processing module 206 configured to perform data processing based on the fused feature map.

In a possible implementation, the conversion module 202 is specifically configured to:
determine multiple grids of a same size based on the dimension of the image data;
segment the one-dimensional data into multiple one-dimensional sub-data according to a preset size; and
fill the one-dimensional sub-data into each grid to form the two-dimensional data.

In a possible implementation, the fusion module 205 is specifically configured to:
perform feature selection on the multilayer stacked input feature map to obtain a selected feature map;
perform feature enhancement on the selected feature map to obtain an enhanced feature map; and
decode the enhanced feature map to obtain the fused feature map.

In a possible implementation, the fusion module 205 is specifically configured to:
perform feature extraction and activation on the input feature map through a first convolution unit to obtain an activated feature map;
duplicate the activated feature map into two copies, namely a first activated feature map and a second activated feature map;
perform symmetric flipping on the first activated feature map along a central axis to obtain a symmetric feature map;
perform convolution processing on the second activated feature map through a second convolution unit to obtain a deformed feature map;
multiply the deformed feature map with the symmetric feature map and perform convolution processing through a third convolution unit; and
add the feature map processed by the third convolution unit to the input feature map to obtain the selected feature map.

In a possible implementation, the fusion module 205 is specifically configured to:
perform convolution processing on the selected feature map through a fourth convolution unit and a channel attention unit to obtain a large receptive field feature map;
perform deformation processing on the large receptive field feature map through a linear transformation unit; and
add the deformed large receptive field feature map to the selected feature map to obtain the enhanced feature map.

In a possible implementation, the fusion module 205 is specifically configured to:
perform normalization processing on the enhanced feature map;
perform convolution processing on the normalized enhanced feature map through a fifth convolution unit;
perform channel scaling processing on the convolution-processed enhanced feature map;
add the channel-scaled enhanced feature map to the enhanced feature map to obtain an intermediate feature map and
decode the intermediate feature map through group normalization and a channel multilayer perceptron to obtain the fused feature map.

In a possible implementation, the processing module 206 is specifically configured to:
perform object detection based on the fused feature map.

In a possible implementation, a loss function for training the neural network in object detection is specifically: ${L}_{a} = {λ}_{1} {L}_{C} + {λ}_{2} {L}_{CIoU} + {λ}_{3} {L}_{conf} ,$ where *Lₐ* represents a loss function in an object detection process, *L_{C}* represents a cross-entropy loss, *λ*₁ represents a weight of the cross-entropy loss, *L_{CIoU}* represents a bounding box loss, *λ*₂ represents a weight of the bounding box loss, *L_{conf}* represents a confidence loss, and *λ*₃ represents a weight of the confidence loss.

In a possible implementation, the processing module 206 is specifically configured to:
perform classification processing based on the fused feature map.

In a possible implementation, a loss function for training the neural network in the classification processing is specifically: ${L}_{b} = - {\sum }_{c = 1}^{C} {y}_{c} log \left({p}_{c}\right) ,$ where *L_{b}* represents a loss function in a classification process, *y_{c}* represents an actual label value of a *c*-th category, *p_{c}* represents a predicted classification value of the *c*-th category, and *C* represents a total number of categories.

The data processing apparatus 20 based on multimodal fusion provided by the present invention can implement each process realized in the method embodiments of the first aspect above, and to avoid repetition, it is not described in detail here.

The virtual apparatus provided by the present invention may be an apparatus, or a component, integrated circuit, or chip in a terminal.

Compared with the prior art, the present invention has at least the following beneficial effects:
In the present invention, by converting one-dimensional data into two-dimensional data with the same dimension as the image data and stacking it with the image data, the data formats of different modalities can be unified, enabling them to be processed in the same feature space, significantly simplifying the alignment process between heterogeneous data and ensuring data integrity. By processing the multilayer stacked input feature map through a neural network, the powerful automatic feature extraction capability of the deep learning model can be utilized to efficiently fuse features from different modalities, improving the quality of data fusion.

Finally, it should be noted that the above embodiments are only used to illustrate the technical solutions of the present application and not to limit them; although the present application has been described in detail with reference to the foregoing embodiments, those of ordinary skill in the art should understand that they can still modify the technical solutions described in the foregoing embodiments or make equivalent substitutions for some or all of the technical features; and these modifications or substitutions do not cause the essence of the corresponding technical solutions to depart from the scope of the technical solutions of the embodiments of the present application.

## Claims

1. A data processing method based on multimodal fusion, comprising:
acquiring one-dimensional data and image data;
converting the one-dimensional data into two-dimensional data based on a dimension of the image data;
performing zero-padding processing on vacant positions in the two-dimensional data;
performing stacking processing on the zero-padded two-dimensional data and the image data to obtain a multilayer stacked input feature map;
performing fusion processing on the multilayer stacked input feature map through a neural network to obtain a fused feature map; and
performing data processing based on the fused feature map.

2. The data processing method based on multimodal fusion according to claim 1, wherein the converting the one-dimensional data into two-dimensional data based on a dimension of the image data specifically comprises:
determining multiple grids of a same size based on the dimension of the image data;
segmenting the one-dimensional data into multiple one-dimensional sub-data according to a preset size; and
filling the one-dimensional sub-data into each of the grids to form the two-dimensional data.

3. The data processing method based on multimodal fusion according to claim 1, wherein the performing fusion processing on the multilayer stacked input feature map through a neural network to obtain a fused feature map specifically comprises:
performing feature selection on the multilayer stacked input feature map to obtain a selected feature map;
performing feature enhancement on the selected feature map to obtain an enhanced feature map; and
decoding the enhanced feature map to obtain the fused feature map.

4. The data processing method based on multimodal fusion according to claim 3, wherein the performing feature selection on the multilayer stacked input feature map to obtain a selected feature map specifically comprises:
performing feature extraction and activation on the input feature map through a first convolution unit to obtain an activated feature map;
duplicating the activated feature map into two copies, namely a first activated feature map and a second activated feature map;
performing symmetric flipping on the first activated feature map along a central axis to obtain a symmetric feature map;
performing convolution processing on the second activated feature map through a second convolution unit to obtain a deformed feature map;
multiplying the deformed feature map with the symmetric feature map and performing convolution processing through a third convolution unit; and
adding the feature map processed by the third convolution unit to the input feature map to obtain the selected feature map.

5. The data processing method based on multimodal fusion according to claim 3, wherein the performing feature enhancement on the selected feature map to obtain an enhanced feature map specifically comprises:
performing convolution processing on the selected feature map through a fourth convolution unit and a channel attention unit to obtain a large receptive field feature map;
performing deformation processing on the large receptive field feature map through a linear transformation unit; and
adding the deformed large receptive field feature map to the selected feature map to obtain the enhanced feature map.

6. The data processing method based on multimodal fusion according to claim 3, wherein the decoding the enhanced feature map to obtain the fused feature map specifically comprises:
performing normalization processing on the enhanced feature map;
performing convolution processing on the normalized enhanced feature map through a fifth convolution unit;
performing channel scaling processing on the convolution-processed enhanced feature map;
adding the channel-scaled enhanced feature map to the enhanced feature map to obtain an intermediate feature map; and
decoding the intermediate feature map through group normalization and a channel multilayer perceptron to obtain the fused feature map.

7. The data processing method based on multimodal fusion according to claim 1, wherein the performing data processing based on the fused feature map specifically comprises:
performing object detection based on the fused feature map.

8. The data processing method based on multimodal fusion according to claim 7, wherein a loss function for training the neural network in the object detection is specifically: ${L}_{a} = {λ}_{1} {L}_{C} + {λ}_{2} {L}_{CIoU} + {λ}_{3} {L}_{conf} ,$ wherein *Lₐ* represents a loss function in an object detection process, *L_{C}* represents a cross-entropy loss, *λ*₁ represents a weight of the cross-entropy loss, *L_{CIoU}* represents a bounding box loss, *λ*₂ represents a weight of the bounding box loss, *L_{conf}* represents a confidence loss, and *λ*₃ represents a weight of the confidence loss.

9. The data processing method based on multimodal fusion according to claim 1, wherein the performing data processing based on the fused feature map specifically comprises:
performing classification processing based on the fused feature map;
wherein a loss function for training the neural network in the classification processing is specifically: ${L}_{b} = - {\sum }_{c = 1}^{C} {y}_{c} log \left({p}_{c}\right) ,$
wherein *L_{b}* represents a loss function in a classification process, *y_{c}* represents an actual label value of the *c*-th category, *p_{c}* represents a predicted classification value of the *c*-th category, and *C* represents a total number of categories.

10. A data processing apparatus based on multimodal fusion, comprising:
an acquisition module configured to acquire one-dimensional data and image data;
a conversion module configured to convert the one-dimensional data into two-dimensional data based on a dimension of the image data;
a zero-padding module configured to perform zero-padding processing on vacant positions in the two-dimensional data;
a stacking module configured to perform stacking processing on the zero-padded two-dimensional data and the image data to obtain a multilayer stacked input feature map;
a fusion module configured to perform fusion processing on the multilayer stacked input feature map through a neural network to obtain a fused feature map; and
a processing module configured to perform data processing based on the fused feature map.
